# EUROPEAN PATENT SPECIFICATION

(11) **EP 3 047 129 B1**
(45) Date of publication and mention of the grant of the patent: **16.08.2017**
(21) Application number: 14789388.7
(22) Date of filing: 18.09.2014
(51) Int. Cl.: F02C 7/224, F02C 9/28, F23N 5/00

(54) **METHOD OF CONTROLLING EMISSIONS OF A GAS TURBINE PLANT AND GAS TURBINE PLANT**
VERFAHREN ZUR STEUERUNG DER EMISSIONEN EINER GASTURBINENANLAGE SOWIE GASTURBINENANLAGE
PROCÉDÉ DE CONTROLE DES ÉMISSIONS D'UNE INSTALLATION À TURBINE À GAZ ET INSTALLATION À TURBINE À GAZ

(30) Priority: 18.09.2013 IT MI20131539
(43) Date of publication of application: 27.07.2016
(73) Proprietor: Ansaldo Energia S.p.A., Genova (IT)
(72) Inventor: PICCARDO, Fabio, I-16149 Genova (IT); ROVERE, Nicola, I-16137 Genova (IT)
(74) Representative: Bernotti, Andrea
(86) International application number: PCT/IB2014/064637
(87) International publication number: WO 2015/040569

(56) References cited:
- EP-A2- 2 527 737
- WO-A1-2013/126278
- US-A1- 2004 011 050
- US-A1- 2013 125 555

## Description

### TECHNICAL FIELD

The present invention relates to a method of controlling emissions of a gas turbine plant and to a gas turbine plant.

### BACKGROUND ART

As known, controlling polluting emissions is an objective of primary importance in the making of any type of thermal machine, and in particular of gas turbines used for the production of electricity. Indeed, the increased awareness of environmental risks moves towards regulations which impose increasingly more restrictive limits.

Containing emissions is particularly critical when the thermal machines operate in low load conditions, because the machines are optimized to deliver higher powers. Critical conditions occur, for example, during the night, when the gas turbines operate in technical minimum environmental conditions because the energy demand is very low. Such a management provides the economic advantage to the plant user to be able to respond to sudden requests from the power grid with low fuel consumption, but on the other hand regulations require to maintain emissions within an authorized limit value.

One of the problems to be faced to abate polluting emissions in efficient manner is maintaining optimal working conditions, which allow the complete oxidation of the carbon contained in the fuel. If combustion conditions are not ideal and sufficient energy is not reached, a fraction of the available carbon is only partially oxidized and produces carbon monoxide (CO).

On the other hand, the amount of CO which may be emitted into the environment is limited by severe environmental regulations. The need to respect the set limits very often forces to set power references for the turbines which are higher than the technical mechanical minimum of the machine also when the actually requested load is lower. In this manner, the combustion temperature increases and the available, incompletely oxidized carbon fraction and the amount of produced CO are reduced as a consequence. Although the solution allows to respect the legal limits, there is a greater consumption of fuel and an excess of produced energy with respect to real needs.

Combustion in non-optimal conditions, which correspond to the production of CO, also has negative effects on thermal machine efficiency. Indeed, the CO molecule, in which the carbon is only partially oxidized, still contains available energy which could be released by complete oxidation (with production of CO₂). Instead, the available
energy is introduced into the environment with the exhaust fumes and cannot be exploited by the gas turbine. The efficiency of the machine is thus reduced.

WO 2013/126278 A1 discloses a method of controlling emissions of a gas turbine plant, which comprises a compressor, a combustion chamber and a gas turbine. According to the method, concentrations of NOx and CO are detected in exhaust gases at the exhaust of the gas turbine and the fuel gas flow supplied to the combustion chamber is heated on the basis of the detected emissions and of respective reference concentration values.

Another example of a known solution is disclosed in EP 2 527 737 A2.

### DISCLOSURE OF INVENTION

It is thus the object of the present invention to provide a method for controlling emissions of a gas turbine plant and a gas turbine plant which allow to overcome, or at least attenuate, the described limitations.

According to the present invention, a method of controlling emissions of a gas turbine plant and a gas turbine plant are provided as disclosed in claims 1 and 8, respectively.

### BRIEF DESCRIPTION OF THE DRAWINGS

The present invention will now be described with reference to the accompanying drawings, which illustrate some non-limitative embodiments thereof, in which:
- figure 1 is a simplified block diagram of a gas turbine plant in accordance with an embodiment of the present invention;
- figure 2 is a more detailed block diagram of a control device incorporated in the gas turbine plant in figure 1;
- figure 3 is a diagram which shows first quantities related to the plant in figure 1 and to the control device in figure 2;
- figure 4 is a more detailed block diagram of a control device incorporated in the gas turbine plant in figure 1 according to a variant of the invention; and
- figure 5 is a diagram which shows second quantities related to the plant in figure 1 and to the control device in figure 4.

### BEST MODE FOR CARRYING OUT THE INVENTION

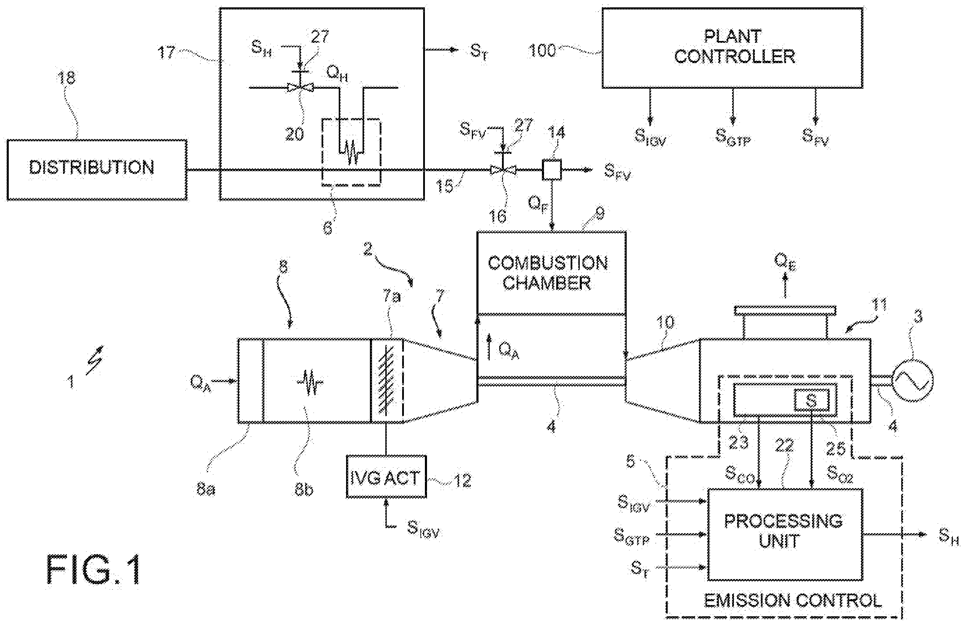

With reference to figure 1, a plant for the production of electricity, indicated by reference numeral 1 as a whole, comprises a gas turbine assembly 2, an alternator 3, coupled to the same shaft 4, and an emission control device 5, in particular of carbon monoxide (CO), and a heat exchanger 6, cooperating with the emission control device 5.

The gas turbine assembly 2 comprises a compressor 7, which aspirates an air flow Q_{A} from the outside through an intake pipe 8, a combustion chamber 9 and a turbine 10, coupled to the combustion chamber 9 to receive and expand the exhaust-gas flow Q_{E}. An exhaust pipe 11, downstream of the turbine 10, receives and evacuates an exhaust-gas flow Q_{E} produced by the gas turbine assembly 2.

The compressor 7 is of the axial multistage type and is provided with an adjustable inlet guide vane or IGV stage 7a. The orientation of the vanes of the IGV stage 7a is determined by an IGV actuator 12 which receives an IGV regulation signal S_{IGV} from a general plant controller 100, not described in detail herein.

The air flow Q_{A} aspirated by the compressor 7 is conveyed through the intake pipe 8, along which a filter 8a and a conditioning chamber 8b are arranged, and processed by the compressor 7. The air flow Q_{A} is introduced into the combustion chamber 9. A fuel gas flow Q_{F} is added to the air flow Q_{A} and the resulting mixture is burnt, producing the exhaust-gas flow Q_{E}.

The fuel gas flow Q_{F} is injected by a fuel supply line 15 and a fuel supply valve 16 controlled by the general plant controller 100, through a fuel regulation signal S_{FV}. In an embodiment, the fuel gas flow Q_{F} is measured by a flow measuring device 14 which supplies a flow signal S_{F}.

Upstream of the fuel supply valve, 16, the fuel supply line 15 crosses the heat exchanger 6, which is controlled by the emission control device 5 to adjust the temperature of the fuel flow Q_{F} delivered to the combustion chamber 9. The heat exchanger 6 may be either dedicated to fuel temperature regulation or also shared for other functions. Advantageously, in an embodiment, the heat exchanger 6 is incorporated in a fuel gas pressure reduction system 17. The fuel gas pressure reduction system 17 is an auxiliary system which allows to adapt the pressure and the temperature of the fuel gas coming from a distribution source 18, e.g. a methane pipeline, to the needs of the thermal machine, in particular of the gas turbine plant 2. In particular, the fuel gas pressure reduction system 17 uses regulation valves (not shown) to reduce and control the fuel pressure coming from the distribution source 18. The reduction of the gas pressure, for example obtained by expansion, causes a lowering of the temperature. The heat exchanger 6 allows to supply heat to the expanded gas, adjusting the temperature so as to optimize the combustion conditions.

The thermal energy is controlled by a heating regulation valve 20, which determines a heating fluid flow Q_{H} let into the heat exchanger 6. In turn, the heating regulation valve 20 is operated by the emission control device 5 through a heating regulation signal S_{H}, as explained in detail below.

The emission control device 5 comprises a processing unit 22 and a sensor assembly 23, arranged in the exhaust pipe 11 of the turbine 10, so as to receive the exhaust gas flow. In particular, the sensor assembly 23 comprises an oxygen sensor 25, for example a lambda sensor, providing an oxygen concentration signal S_{O2}, indicating the residual oxygen concentration O₂ in the exhaust-gas flow Q_{E}. Furthermore, the sensor assembly 23 may comprise detection cells for measuring the concentrations of carbon monoxide (CO) and of nitrogen oxides (NOx), temperature sensors and pressure sensors.

In an embodiment, the processing unit 22 is a PLC (Programmable Logic Controller) and is coupled to the sensor assembly 23 to receive measuring signals, including the oxygen concentration signal S_{O2} supplied by the oxygen concentration sensor 25. In a different embodiment, the processing unit 22 is incorporated in the general plant controller 100 of the plant 1.

Furthermore, the processing unit 22 may receive a CO concentration signal S_{CO} from the sensor assembly 23; a position signal IGV S_{IGV}, indicating the current position of the vanes of the IGV stage 7a, and a load signal S_{GTP}, indicating the power supplied by the gas turbine 10, from the general plant controller 100; and a temperature reference S_{T}, set by the fuel gas pressure reduction system 17 (alternatively, the temperature reference S_{T} may be determined directly by the processing unit 22, e.g. according to the position signal IGV S_{IGV}, and to the load signal S_{GTP}).

The processing unit 22 is configured to determine the heating regulation signal S_{H} according to the oxygen concentration signal S_{O2}.

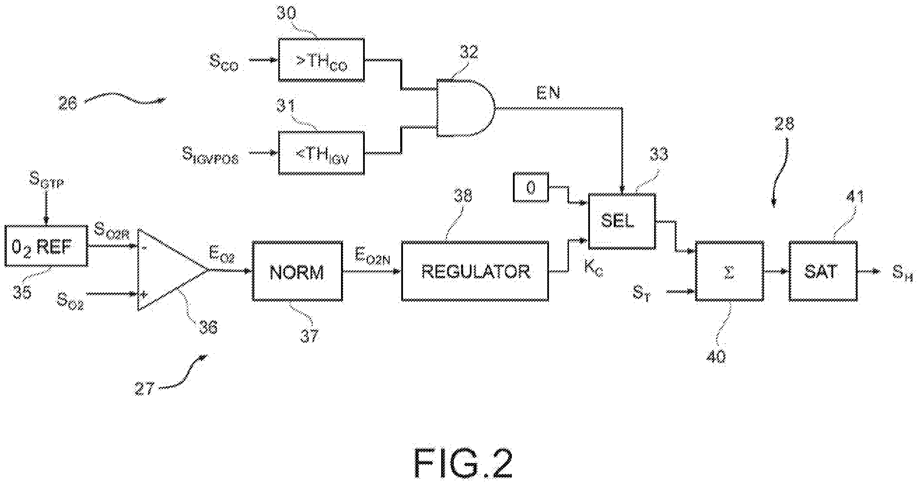

With reference to figure 2, in an embodiment, the processing unit comprises an enable stage 26, a regulation stage 27, and a processing stage 28.

The enable stage 26 is configured to activate and deactivate the regulation stage 27 as a function of the operating conditions of the gas turbine assembly 2, in particular as a function of the CO concentration (available by means of the CO concentration signal S_{CO}) and of the position of the vanes of the IGV stage 7a (available by means of the IGV position signal S_{IGV}). The enable stage 26 comprises two threshold comparators 30, 31, a logical port 32 and a selector module 33.

The threshold comparator 30 receives the CO concentration signal S_{CO} in input and delivers a comparison signal S_{TH1} having a first logical value, when the CO concentration signal S_{CO} is higher than a concentration threshold TH_{CO}, and a second logical value in the opposite case.

The threshold comparator 31 receives the IGV position signal S_{IGV} in input and delivers a comparison signal S_{TH2} having a first logical value, when the IGV position signal S_{IGV} is lower than an opening threshold TH_{IGV}, and a second logical value in the opposite case.

The logical port 32 delivers an enable signal S_{EN} as a function of the comparison signals S_{TH1}, S_{TH2}. In particular, the logical port 32 is configured so that the enable signal S_{EN} has an enable value when, according to the comparison signals S_{TH1}, S_{TH2}, the CO concentration signal S_{CO} is higher than a CO concentration threshold TH_{CO} and the position signal IGV S_{IGV} is lower than the opening threshold TH_{IGV}, and a disable value otherwise.

The selector module 33 is controlled by the enable signal. In detail, the selector module 33 delivers the output of the regulation stage 27 to the processing stage 28 when the enable signal EN has the enable value, and a neutral control value, for example zero value, when the enable signal EN has the disable value.

The regulation stage 27 uses the heating regulation signal S_{H} as control variable to maintain the residual oxygen concentration O₂ (controlled variable) in the exhaust gases at a reference value. The residual oxygen concentration O₂ represents the combustion conditions. In particular, the power supplied by the gas turbine assembly 2 being equal, the residual oxygen concentration O₂ is higher the lower is the degree of carbon oxidation present in the fuel gas, and consequently higher is the CO concentration in the exhaust fumes. An increase of the fuel gas temperature determines a corresponding increase of the energy in the combustion chamber 9 and the complete oxidation of a greater fraction of the available carbon.

In an embodiment, the regulation stage 27 comprises a reference generator module 35, a comparator 36, a normalizer module 37 and a regulator module 38.

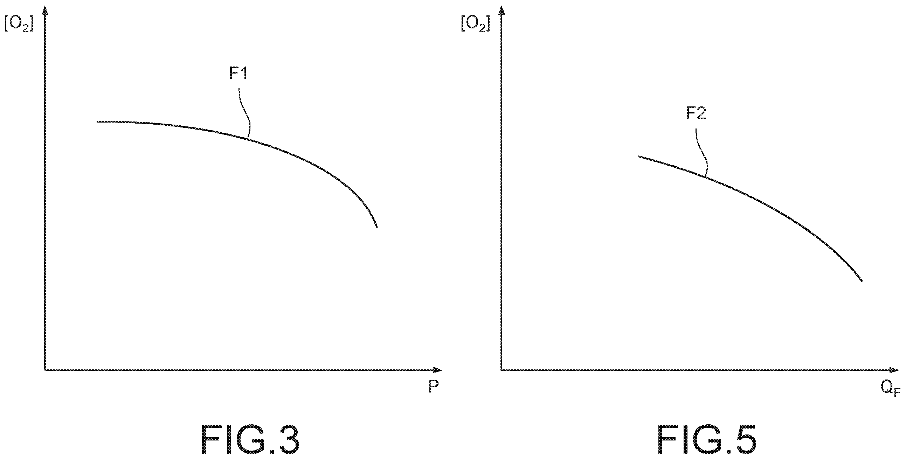

The reference generator module 35 provides a reference concentration value S_{O2R} for the residual oxygen concentration O₂ in the exhaust gases according to the load signal S_{GTP}, indicating the power supplied by the gas turbine assembly 2, and a characteristic function F1, shown by way of example in figure 3. The characteristic function F1 indicates the residual oxygen concentration O₂ as the power P supplied by the gas turbine 10 varies and is determined by the construction features of the gas turbine assembly 2. The reference generator module 35 may comprise, for example, a table representing the characteristic function F1, which is determined during the step of designing of the gas turbine assembly 2.

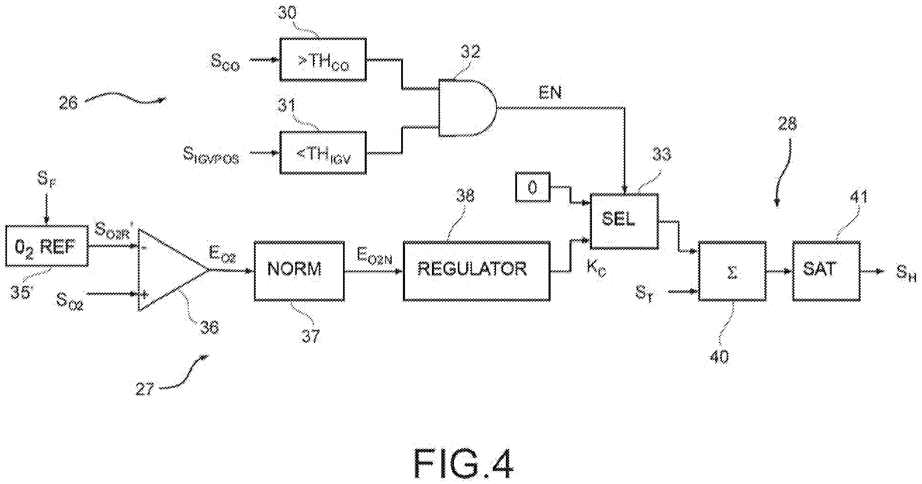

In an alternative embodiment (figure 4), a reference concentration value S_{O2R}' may be delivered by a reference generator module 35' according to the measured fuel gas flow Q_{F} (using the flow signal S_{F}) and a characteristic function F2, shown by way of example in figure 5. The characteristic function F2 indicates the residual oxygen concentration O₂ as the exhaust-gas flow Q_{E} varies. The reference generator module 35' may comprise, for example, a table representing the characteristic function F2.

With reference again to figure 2, the comparator 36 receives the reference concentration value S_{O2R} and the oxygen concentration signal S_{O2} and determines an error signal E_{O2} from the difference between the oxygen concentration signal S_{O2} and the reference concentration value S_{O2R}.

The normalizer module 37 receives the error signal E_{O2} from the comparator 36 and supplies a normalized error signal E_{O2N} to the regulator module 38.

The regulator module 38 is configured to determine a correction coefficient K_{C} which, applied to the temperature reference S_{T} set by the fuel gas pressure reduction system 17, tends to cancel or reduce the error signal E_{O2}, taking the actual residual oxygen concentration O₂ to the reference concentration value S_{O2R}. By way of non-limiting example, in an embodiment, the regulator module 38 includes a proportional-integral type regulator.

The processing stage 28 is configured to generate a heating control signal S_{H} by combining the temperature reference S_{T} and the control value delivered by the selector module 33 of the enable stage 26 (i.e. the zero value or the correction coefficient K_{C} in presence of the deactivation value and of the enable value of the enable signal EN, respectively). In practice, when the regulation stage 27 is disabled, the processing stage 28 receives the neutral control value, which does not change the general control action of the plant. Instead, when the regulation stage 27 is enabled, the processing stage 28 applies the correction coefficient K_{C} to modify the temperature reference S_{T}.

In an embodiment, in particular, the correction coefficient KC is an additive coefficient. In this case, the processing stage 28 comprises an adder module 40, downstream of which a limiter module 41 is placed. The adder module 40 adds the control value receive from the selector module 33 and the temperature reference S_{T}. The signal thus formed is delivered to the limiter module 41, to be limited to values compatible with the fuel gas pressure reduction system 17. The output of the limiter module 41 defines the heating regulation signal S_{H}.

In practice, the emission control device 5 intervenes at low loads, when criticalities are detected in the CO concentrations in exhaust and the general plant controller has no margin to decrease the air flow Q_{A} delivered to the combustion chamber (i.e. when the vanes of the IGV stage 7a cannot be closed any further). In this case, the heating regulation signal S_{H} determines an increase of the temperature reference S_{T} for the fuel gas pressure reduction system 17, which, through the heat exchanger 6, in turn, produces an increase of the fuel gas temperature introduced into the combustion chamber. As mentioned above, this temperature increase reduces the incompletely oxidized carbon fraction present in the exhaust gases, and consequently abates CO emissions. Furthermore, the available energy is exploited more completely during combustion.

The invention thus allows to contain CO emissions so as to satisfy the stringent constraints set by standards, in particular for loads close to the technical environmental minimum, while the efficiency of the gas turbine assembly is increased.

An advantage of the invention derives from the use of the residual oxygen concentration O₂ as controlled variable in the CO emission abatement process. Indeed, a control based on the residual oxygen concentration O₂ benefits from a substantial immunity to interfering substances present in the exhaust gases, and is thus more accurate. On the contrary, the CO concentration measurements may be alternated with the presence of aqueous vapor in the exhaust fumes. A control based directly on the CO concentration would thus suffer from more significant error margins.

It is finally apparent that changes and variations can be made to the described method and plant without departing from the scope of protection of the present invention as defined in the appended claims.

## Claims

1. A method of controlling emissions of a gas turbine plant (1) comprising a compressor (7), a combustion chamber (9), and a gas turbine (10);
the method comprising:
detecting an oxygen concentration (S_{O2}) in exhaust gases (Q_{E}) at the exhaust of the gas turbine (10); and
heating a fuel gas flow (Q_{F}) supplied to the combustion chamber (9), on the basis of the detected oxygen concentration (S_{O2} and of a reference concentration value ( S_{O2R}; S_{O2R}')

2. A method as claimed in Claim 1, wherein heating comprises controlling a thermal energy supplied to the fuel gas flow (Q_{F}) so as to keep the detected oxygen concentration (S_{O2}) at the reference concentration value (S_{O2R}; S_{O2R}')

3. A method as claimed in Claim 1 or 2, wherein heating comprises using a heat exchanger (6).

4. A method as claimed in Claim 3, wherein heating comprises controlling a heating fluid flow (Q_{H}) supplied to the heat exchanger (6).

5. A method as claimed in any one of the foregoing Claims, comprising determining a concentration error (E_{O2}) from the difference between the detected oxygen concentration (S_{O2}) and the reference concentration value (S_{O2R}; S_{O2R}').

6. A method as claimed in any one of the foregoing Claims, comprising determining the reference concentration value (S_{O2R}) on the basis of a power (S_{GTP}) delivered by the gas turbine (10).

7. A method as claimed in any one of Claims 1 to 5, comprising measuring the fuel gas flow (Q_{F}), and determining the reference concentration value (S_{O2R}') on the basis of the measured fuel gas flow (Q_{F}).

8. A gas turbine plant comprising:
a combustion chamber (9);
a fuel supply line (15), supplying a fuel gas flow (Q_{F}) to the combustion chamber (9);
a heat exchanger (6) along the fuel supply line (15);
a gas turbine (10), receiving an exhaust-gas flow (Q_{E}) from the combustion chamber (9);
**characterized by**:
an oxygen sensor (25), arranged along an exhaust pipe (11) of the gas turbine (10) and configured to supply an oxygen concentration signal (S_{O2}) indicating an oxygen concentration in the exhaust-gas flow (Q_{E}); and
a control device (5) configured to control the heat exchanger (6) so as to heat the fuel gas flow (Q_{F}) on the basis of the oxygen concentration signal (S_{O2}) and of a reference concentration value (S_{O2R}; S_{O2R}').

9. A plant as claimed in Claim 8, wherein the control device (5) comprises a regulation stage (27) configured to determine an error (E_{O2}) from the difference between the oxygen concentration (S_{O2}) and the reference concentration value (S_{O2R}; S_{O2R}'), and to supply the heat exchanger (6) with a regulation signal (S_{H}) on the basis of the error signal (E_{O2}).

10. A plant as claimed in Claim 9, wherein the regulation stage (27) comprises a regulator module (38) receiving the error signal (E_{O2}).

11. A plant as claimed in Claim 9 or 10, wherein the regulation stage (27) comprises a reference generator module (35; 35'), configured to supply the reference concentration value (S_{O2R}; S_{O2R}'), and a comparator (36), receiving the oxygen concentration signal (S_{O2}) from the oxygen sensor (25) and the reference concentration value (S_{O2R}) from the reference generator module (35) and configured to determine the error signal (E_{O2}) from the difference between the oxygen concentration signal (S_{O2}) and the reference concentration value (S_{O2R}).

12. A plant as claimed in Claim 11, comprising an overall system controller (100) for supplying a load signal (S_{GTP}) indicating a power delivered by the gas turbine (10); and wherein the reference generating module (35) determines the reference concentration value (S_{O2R}) on the basis of the power delivered by the gas turbine (10).

13. A plant as claimed in Claim 11, comprising a flow measuring device (14) located along the fuel supply line (15) and configured to supply a flow signal (S_{F}) indicating fuel gas flow (Q_{F}) to the combustion chamber (9); and wherein the reference generator module (35') is configured to determine the reference concentration value (S_{O2R}') on the basis of the flow signal (S_{F}).

14. A plant as claimed in any one of Claims 8 to 13, comprising:
a compressor (7) having an adjustable-blade input stage (7a);
a sensor assembly (23), configured to supply a carbon monoxide concentration signal (S_{CO}) indicating a carbon monoxide concentration in the exhaust-gas flow (Q_{E}) ; and
an enable stage (26) configured to activate and deactivate the regulation stage (27) on the basis of the carbon monoxide concentration signal (S_{CO}) and of a position of the blades of the adjustable-blade input stage (7a).

15. A plant as claimed in any one of Claims 8 to 14, comprising a fuel gas pressure reduction system (17), the heat exchanger (6) being incorporated in the fuel gas pressure reduction system (17).

## Patentansprüche

1. Verfahren zur Steuerung der Emissionen einer Gasturbinenanlage (1) umfassend einen Kompressor (7), eine Brennkammer (9) und eine Gasturbine (10), wobei das Verfahren umfasst:
- das Ermitteln einer Sauerstoffkonzentration (S_{O2}) in Abgasen (Q_{E}) am Auslass der Gasturbine (10) und
- Erhitzen einer Brenngasströmung (Q_{F}), die der Brennkammer (9) zugeführt wird, basierend auf der ermittelten Sauerstoffkonzentration (S_{O2}) und eines Referenz-Konzentrationswertes (S_{O2R}, S_{O2R}').

2. Verfahren nach Anspruch 1, worin das Erhitzen das Steuern einer thermischen Energie, die der Brenngasströmung (Q_{F}) zugeführt wird, umfasst, um so die ermittelte Sauerstoffkonzentration (S_{O2}) beim Referenz-Konzentrationswert (S_{O2R}, S_{O2R}') zu halten.

3. Verfahren nach Anspruch 1 oder 2, worin das Erhitzen das Verwenden eines Wärmetauschers (6) umfasst.

4. Verfahren nach Anspruch 3, worin das Erhitzen das Steuern einer Strömung (Q_{H}) eines Heizfluides, das dem Wärmetauscher (6) zugeführt wird, umfasst.

5. Verfahren nach einem der vorhergehenden Ansprüche, umfassend das Ermitteln eines Konzentrationsfehlers (E_{O2}) aus der Differenz zwischen der ermittelten Sauerstoffkonzentration (S_{O2}) und dem Referenz-Konzentrationswert (S_{O2R}, S_{O2R}').

6. Verfahren nach einem der vorhergehenden Ansprüche, umfassend das Ermitteln des Referenz-Konzentrationswertes (S_{O2R}) auf der Basis einer von der Gasturbine (10) abgegebenen Leistung (S_{GTP}).

7. Verfahren nach einem der Ansprüche 1 bis 5, umfassend das Messen der Brenngasströmung (Q_{F}) und das Ermitteln des Referenz-Konzentrationswertes (S_{O2R}') auf Basis der gemessenen Brenngasströmung (Q_{F}).

8. Gasturbinenanlage, umfassend:
- eine Brennkammer (9)
- eine Brennstoff-Zuführungsleitung (15), die der Brennkammer (9) eine Brenngasströmung (Q_{F}) zuführt,
- einen Wärmetauscher (6) entlang der Brennstoff-Zuführungsleitung (15), und
- eine Gasturbine (10), die eine Abgasströmung (Q_{E}) von der Brennkammer (9) aufnimmt,
**gekennzeichnet durch**
einen Sauerstoffsensor (25), der entlang einer Abgasleitung (11) der Gasturbine (10) angeordnet und so ausgebildet ist, dass er ein Sauerstoff-Konzentrationssignal (S_{O2}) zur Verfügung stellt, das eine Sauerstoffkonzentration in der Abgasströmung (Q_{E}) anzeigt, und
eine Steuervorrichtung (5), die so ausgebildet ist, dass sie den Wärmetauscher (6) so steuert, dass er die Brenngasströmung (Q_{F}) auf Basis des SauerstoffKonzentrationssignals (S_{O2}) und eines Referenz-Konzentrationswertes (S_{O2R}; S_{O2R}') steuert.

9. Anlage nach Anspruch 8, worin die Steuervorrichtung (5) eine Regelstufe (27) umfasst, die so ausgebildet ist, dass sie einen Fehler (E_{O2}) aus der Differenz zwischen der Sauerstoffkonzentration (S_{O2}) und dem Referenz-Konzentrationswert (S_{O2R}; S_{O2R}') ermittelt und dem Wärmetauscher (6) ein Regelsignal (S_{H}) auf Basis des Fehlersignals (E_{O2}) zuführt.

10. Anlage nach Anspruch 9, worin die Regelstufe (27) ein Reglermodul (38) umfasst, welches das Fehlersignal (E_{O2}) empfängt.

11. Anlage nach Anspruch 9 oder 10, worin die Regelstufe (27) ein Referenzerzeugungsmodul (35, 35'), das so ausgebildet ist, dass es den Referenz-Konzentrationswert (S_{O2R}; S_{O2R}') zur Verfügung stellt, und einen Komparator (36) umfasst, der das Sauerstoff-Konzentrationssignal (S_{O2}) von dem Sauerstoffsensor (25) und den Referenz-Konzentrationswert (S_{O2R}) von dem Referenzerzeugungsmodul (35) empfängt und so ausgebildet ist, dass er das Fehlersignal (E_{O2}) aus der Differenz zwischen der Sauerstoffkonzentration (S_{O2}) und dem Referenz-Konzentrationswert (S_{O2R}) ermittelt.

12. Anlage nach Anspruch 11, umfassend eine übergeordnete Systemsteuerung (100) zum Bereitstellen eines Lastsignals (S_{GTP}), welches eine von der Gasturbine (10) abgegebene Leistung angibt, und worin das Referenzerzeugungsmodul (35) den Referenz-Konzentrationswert (S_{O2R}) auf Basis der von der Gasturbine (10) abgegebenen Leistung (S_{GTP}) ermittelt.

13. Anlage nach Anspruch 11, umfassend eine Strömungsmessvorrichtung (14), die entlang der Brennstoff-Zuführungsleitung (15) angeordnet und so ausgebildet ist, dass sie ein Strömungssignal (S_{F}) zur Verfügung stellt, das die Brenngasströmung (Q_{F}) zur Brennkammer (9) angibt, und worin das Referenzerzeugungsmodul (35') so ausgebildet ist, dass es den Referenz-Konzentrationswert (S_{O2R}') auf Basis des Strömungssignals (S_{F}) ermittelt.

14. Anlage nach einem der Ansprüche 8 bis 13, umfassend:
- einen Kompressor (7) mit einer Eingangsstufe (7a) mit verstellbaren Schaufeln
- eine Sensorbaugruppe (23), die so ausgebildet ist, dass sie ein Kohlenmonoxid-Konzentrationssignal (Sco) zur Verfügung stellt, das eine Kohlenmonoxidkonzentration in der Abgasströmung (Q_{E}) angibt, und
- eine Schaltstufe (26), die so ausgebildet ist, dass sie die Reglerstufe (27) auf Basis des Kohlenmonoxid-Konzentrationssignals (Sco) und einer Position der Schaufeln der Eingangsstufe (7a) mit verstellbaren Schaufeln aktiviert und deaktiviert.

15. Anlage nach einem der Ansprüche 8 bis 14, umfassend ein System (17) zur Reduzierung des Drucks des Brenngases, wobei der Wärmetauscher (6) Teil des Systems (17) zur Reduzierung des Drucks des Brenngases ist.

## Revendications

1. Procédé de commande d'émissions d'une installation de turbine à gaz (1) comprenant un compresseur (7), une chambre de combustion (9) et une turbine à gaz (10) ;
le procédé comprenant :
la détection d'une concentration en oxygène (S_{O2}) dans des gaz d'échappement (Q_{E}) au niveau de l'échappement de la turbine à gaz (10) ; et
le chauffage d'un flux de gaz de carburant (Q_{F}) fourni à la chambre de combustion (9), sur la base de la concentration en oxygène détectée (S_{O2}) et d'une valeur de concentration de référence (S_{O2R} ; S_{O2R}').

2. Procédé selon la revendication 1, dans lequel le chauffage comprend la commande d'une énergie thermique fournie au flux de gaz de carburant (Q_{F}) de sorte à maintenir la concentration en oxygène détectée (S_{O2}) à la valeur de concentration de référence (S_{O2R} ; S_{O2R}').

3. Procédé selon la revendication 1 ou 2, dans lequel le chauffage comprend l'utilisation d'un échangeur de chaleur (6).

4. Procédé selon la revendication 3, dans lequel le chauffage comprend la commande d'un flux de fluide chauffant (Q_{H}) fourni à l'échangeur de chaleur (6).

5. Procédé selon l'une quelconque des revendications précédentes, comprenant la détermination d'une erreur de concentration (E_{O2}) à partir de la différence entre la concentration en oxygène détectée (S_{O2}) et la valeur de concentration de référence (S_{O2R} ; S_{O2R}').

6. Procédé selon l'une quelconque des revendications précédentes, comprenant la détermination de la valeur de concentration de référence (S_{O2R}) sur la base d'une puissance (S_{GTP}) fournie par la turbine à gaz (10).

7. Procédé selon l'une quelconque des revendications 1 à 5, comprenant la mesure du flux de gaz de carburant (Q_{F}), et la détermination de la valeur de concentration de référence (S_{Q2R}') sur la base du flux de gaz de carburant mesuré (Q_{F}).

8. Installation à turbine à gaz comprenant :
une chambre de combustion (9) ;
une ligne d'alimentation en carburant (15) fournissant un flux de gaz de carburant (Q_{F}) à la chambre de combustion (9) ;
un échangeur de chaleur (6) le long de la ligne d'alimentation en carburant (15) ;
une turbine à gaz (10) recevant un flux de gaz d'échappement (Q_{E}) de la chambre de combustion (9) ;
**caractérisée par** :
un capteur d'oxygène (25) agencé le long d'un tuyau d'échappement (11) de la turbine à gaz (10) et configuré pour fournir un signal de concentration en oxygène (S_{O2}) indiquant une concentration en oxygène dans le flux de gaz d'échappement (Q_{E}) ; et
un dispositif de commande (5) configuré pour commander l'échangeur de chaleur (6) de sorte à chauffer le flux de gaz de carburant (Q_{F}) sur la base du signal de concentration en oxygène (S_{O2}) et d'une valeur de concentration de référence (S_{O2R} ; S_{O2R}').

9. Installation selon la revendication 8, dans laquelle le dispositif de commande (5) comprend un étage de régulation (27) configuré pour déterminer une erreur (E_{O2}) à partir de la différence entre la concentration en oxygène (S_{O2}) et la valeur de concentration de référence (S_{O2R} ; S_{O2R}') et pour fournir à l'échangeur de chaleur (6) un signal de régulation (S_{H}) sur la base du signal d'erreur (E_{O2}).

10. Installation selon la revendication 9, dans laquelle l'étage de régulation (27) comprend un module régulateur (38) recevant le signal d'erreur (E_{O2}).

11. Installation selon la revendication 9 ou 10, dans laquelle l'étage de régulation (27) comprend un module générateur de référence (35 ; 35') configuré pour fournir la valeur de concentration de référence (S_{O2R} ; S_{O2R}'), et un comparateur (36), recevant le signal de concentration en oxygène (S_{O2}) du capteur d'oxygène (25) et la valeur de concentration de référence (S_{O2R}) du module générateur de référence (35) et configuré pour déterminer le signal d'erreur (E_{O2}) à partir de la différence entre le signal de concentration en oxygène (S_{O2}) et la valeur de concentration de référence (S_{O2R}).

12. Installation selon la revendication 11, comprenant un contrôleur système global (100) pour fournir un signal de charge (S_{GTP}) indiquant une puissance fournie par la turbine à gaz (10) ; et dans laquelle le module générateur de référence (35) détermine la valeur de concentration de référence (S_{O2R}) sur la base de la puissance fournie par la turbine à gaz (10).

13. Installation selon la revendication 11, comprenant un dispositif de mesure de flux (14) situé le long de la ligne d'alimentation en carburant (15) et configuré pour fournir un signal de flux (S_{F}) indiquant le flux de gaz de carburant (Q_{F}) à la chambre de combustion (9) ; et dans laquelle le module générateur de référence (35') est configuré pour déterminer la valeur de concentration de référence (S_{O2R}') sur la base du signal de flux (S_{F}).

14. Installation selon l'une quelconque des revendications 8 à 13, comprenant :
un compresseur (7) présentant un étage d'entrée de pale ajustable (7a) ;
un ensemble capteur (23) configuré pour fournir un signal de concentration en monoxyde de carbone (S_{CO}) indiquant une concentration en monoxyde de carbone dans le flux de gaz d'échappement (Q_{E}) ; et
un étage d'activation (26) configuré pour activer et désactiver l'étage de régulation (27) sur la base du signal de concentration en monoxyde de carbone (S_{CO}) et d'une position des pales de l'étage d'entrée de pale ajustable (7a).

15. Installation selon l'une quelconque des revendications 8 à 14, comprenant un système de réduction de pression de gaz de carburant (17), l'échangeur de chaleur (6) étant incorporé dans le système de réduction de pression de gaz de carburant (17).
